Europäisches Patentamt

European Patent Office

Office européen des brevets

(11) Publication number: **0 183 309**
**B1**

## (12) EUROPEAN PATENT SPECIFICATION

(45) Date of publication of patent specification: **20.12.89**

(21) Application number: **85201858.9**

(22) Date of filing: **12.11.85**

(51) Int. Cl.⁴: **B 65 G 47/71**

(54) Out-liner for the transformation of a single line of moving products into a plurality of rows.

(30) Priority: **28.11.84 BE 901143**

(43) Date of publication of application:
**04.06.86 Bulletin 86/23**

(45) Publication of the grant of the patent:
**20.12.89 Bulletin 89/51**

(84) Designated Contracting States:
**BE DE FR GB NL**

(56) References cited:
**DE-A-2 727 278
DE-U-1 924 366
FR-A-2 531 046
GB-A-2 082 997
US-A-2 369 557**

(73) Proprietor: **Speciaal-Machinefabriek J.H. van
Uitert B.V.
Industriestraat 14-16
NL-5107 NC Dongen (NL)**

(72) Inventor: **van Uitert, Johannes Hendrikus
Vaartweg 33
NL-5109 RB 's-Gravenmoer (NL)**

(74) Representative: **Lips, Hendrik Jan George, Ir.
et al
HAAGSCH OCTROOIBUREAU Breitnerlaan.146
NL-2596 HG Den Haag (NL)**

Courier Press, Leamington Spa, England.

## Description

The invention relates to an out-liner for the transformation of a single row of moving products such as bottles, pots, tins and the like, into a plurality of rows, said single row being moved by a supply conveyor track and said plurality of rows being moved by a number of discharge conveyor tracks moving at a lower speed than the supply conveyor track, a transition area being present between said supply conveyor track and said discharge conveyor tracks and comprising a number of transition conveyor tracks the width of each of said tracks being substantially equal to the width of the products, the upper surfaces of said tracks being located in an obliquely positioned plane, the speed of the transition conveyor tracks decreasing stepwise between the supply conveyor track and the discharge conveyor tracks, a first product guide being present above the transition and the discharge conveyor tracks, said guide starting near the beginning of the transition track which is positioned directly beside the supply track and extending in downstream direction towards the outside of the discharge conveyor tracks, a second product guide being located at the other side of the supply track opposite the first guide, said second guide comprising a portion extending obliquely over the supply track for positively bringing the products onto the transition track and a portion extending obliquely over the transition track in a downstream direction till the discharge tracks lying beside a transition track, means being present to control the transverse inclination of the conveyor tracks.

Such an out-liner is known from FR—A—2,531,046. Now the invention aims to improve this known out-liner in such a way that the number of collisions between the conveyed products is decreased, by which the noise level is lowered and damage of products is prevented.

According to the invention this object is reached by an out-liner being characterized in that the transition conveyor tracks and the discharge conveyor tracks have a curved section, the supply conveyor track being connected to that transition conveyor track which is lying at the inner side of said curved section, the plane in which the upper surfaces of the conveyor tracks are located declining downwards from the inner side of the curve as seen in a direction transverse to the direction of movement of said tracks means being present to control the speed of the supply conveyor track.

By using a curved section a centrifugal force will act upon the products, said centrifugal force working in the same direction as the gravity by which the products are brought onto the discharge tracks. By this the angle of inclination of the track can be smaller than in case of straight tracks so that there is less danger that products are overturning. Further, it has appeared that by using a smaller angle of inclination a more gradual retardation and accumulation of the products is obtained so that the noise level will be lowered.

Preferably a provision will be made that the angle of the inclination of the conveyor tracks in the transition area will be between 5° and 25°.

To adjust the device for various products it can be provided that the vertical distance of the product guides above the conveyor tracks can be adjusted. By doing this the products can be supported by the guides about at the height of their center of gravity.

Further the product guides will preferably be horizontally adjustable for adjustment of the device to the width of the conveyed products.

In particular it may be provided that the product guides are automatically adjustable in horizontal and vertical directions, so that on change of products moving over the conveyor tracks the adjustment of the product guides can take place in an easy manner.

Further collecting channels can be provided at the lower side of the conveyor tracks to collect overturned products. So overturned products, if any, will not hamper the movement of other products.

According to the invention in particular the conveyor tracks may be composed of conveyor chains.

The construction of a device according to the invention may be such, that the conveyor tracks are driven by means of a single motor.

According to an embodiment of the invention, the control means will consist of sensors positioned along the conveyor tracks for observing the joining of the products moving in line, the signals of said sensors being processed in a control unit governing the speed and the transverse gradient of the conveyor tracks in the transition area.

The control unit herein may be a programmed PLC (programmable logic chip) or a microprocessor.

The invention will now be elucidated by means of an embodiment, shown in the drawing, in which:

Figure 1 shows a top view of an out-liner according to the invention; and

Figure 2 shows a cross-section along the line II—II of Figure 1.

According to a possible embodiment of the invention the conveyor tracks each will be in the shape of a conveyor chain. So the device shown in the drawing comprises a supply track 1 consisting of one conveyor chain over which a single line 1a of containers 2, for example bottles, are transported in an upright position. This single line 1a is transformed into a plurality of lines 4a by means of the device 3, said lines 4a being discharged by means of the conveyor chains 4.

Between the supply conveyor chain 1 and the discharge conveyor chains 4 a number of transition tracks 5 are located. These tracks 5 are driven at mutually differing speeds in such a manner that a gradual transition is obtained between the speed of the chain 1 and the speed of the chains 4, so that the containers 2 will be transported gradually at a lower speed.

Various guiding rods, such as the rods 6, 7 and 8 are provided for guiding the products, said rod comprising the portions 6a and 6b.

In order to transfer the products 2 from the track 1 to the tracks 4 as gradually as possible and with as little as possible collisions, the common top plane 9, wherein the tracks 1, 4 and 5 are located, has an inclined position, as appears in particular from Figure 2. The inclination of the plane 9 is such, that it declines downward from the single track 1. The angle of inclination α may be between 5° and 25°.

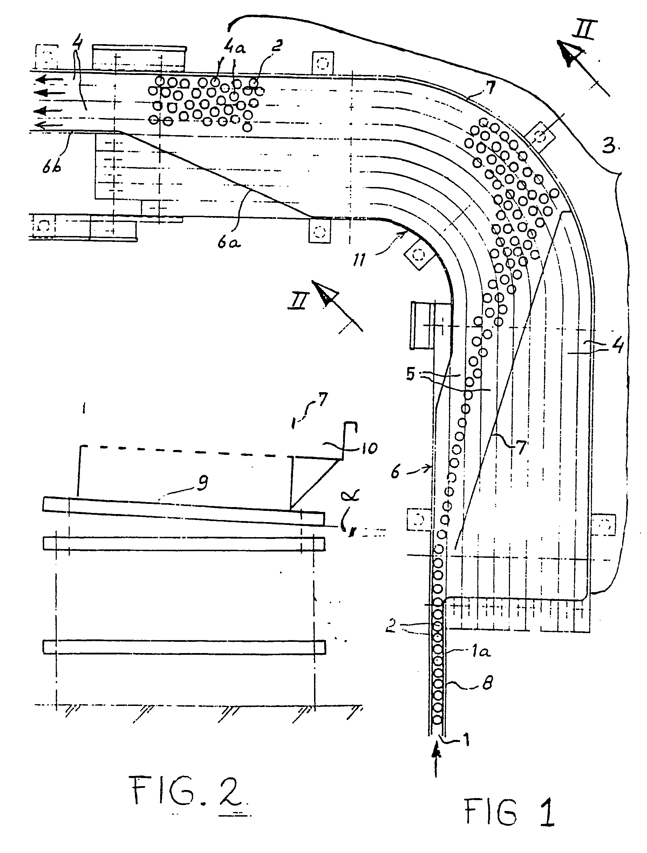

As appears from Figure 1, the discharge direction of the plurality of lines 4a of products 2 is transverse to the supply direction of the single line 1a, in such a manner that the tracks 4 and 5 extend over a curved section 11.

As in this the centrifugal force and the force of gravity are acting in the same direction, they will reinforce each other, which may be favourable if the containers slide with difficulty, while a too large inclination of the various tracks would increase the risk of overturning of the products.

The various tracks 1, 4 and 5 can be driven by means of a common motor, of course transmissions being used to move a track with the desired speed. To that end, for example, use may be made of chain wheels with an adapted diameter and which are mounted on a common shaft driven by the motor.

As observed above, the guiding rods 6, 7 and 8 will be adjustable in horizontal and vertical directions, at least in part, so that the device can be adapted to products with different width or diameter and with a different height. It is actually desirable to support the products at about the height of the centre of gravity, while in particular the guiding rods 7 will be at such a level that overturned products may pass underneath them to get to the collecting channels 10 beside the conveyor tracks.

Thus, for example, the speeds of the various chains, in particular of the discharge chains 4, may be chosen such that bottles supplied closely together over track 1 are spread from each other, while on the other hand, it is also possible to bring the bottles closer together if they are supplied wide apart from each other.

## Claims

1. Out-liner for the transformation of a single row (1a) of moving products (2) such as bottles, pots, tins and the like, into a plurality of rows (4a), said single row (1a) being moved by a supply conveyor track (1) and said plurality of rows (4a) being moved by a number of discharge conveyor tracks (4) moving at a lower speed than the supply conveyor track (1), a transition area (3) being present beween said supply conveyor track (1) and said discharge conveyor tracks (4) and comprising a number of transition conveyor tracks (5) the width of each of said tracks being substantially equal to the width of the products (2), the upper surfaces of said tracks (1, 4, 5) being located in an obliquely positioned plane (9), the speed of the transition conveyor tracks (5) decreasing stepwise between the supply conveyor track (1) and the discharge conveyor tracks (4), a first product guide (7) being present above the transition and the discharge conveyor tracks (5, 4), said guide (7) starting near the beginning of the transition track (5) which is positioned directly beside the supply track (1) and extending in downstream direction towards the outside of the discharge conveyor tracks (3), a second product guide (6) being located at the other side of the supply track (1) opposite the first guide (7), said second guide (6) comprising a portion extending obliquely over the supply track (1) for positively bringing the products (2) onto the transition track (5) and a portion extending obliquely over the transition track (5) in a downstream direction till the discharge tracks (4) lying beside a transition track (5), means being present to control the transverse inclination of the conveyor tracks (1, 4, 5), characterized in that the transition conveyor tracks (5) and the discharge conveyor tracks (4) have a curved section (11), the supply conveyor track (1) being connected to that transition conveyor track which is lying at the inner side of said curved section (11), the plane (9) in which the upper surfaces of the conveyor tracks (1, 4, 5) are located declining downwards from the inner side of the curve as seen in a direction transverse to the direction of movement of said tracks (1, 4, 5), means being present to control the speed of the supply conveyor track (1).

2. Out-liner according to Claim 1, characterized in that the angle of the inclination (α) of the conveyor tracks (1, 4, 5) in the transition area (3) is between 5° and 25°.

3. Out-liner according to Claim 1 or 2, characterized in that the vertical distance of the product guide (6, 7) above the conveyor tracks (1, 4, 5) can be adjusted.

4. Out-liner according to one of the preceding claims, characterized in that the product guides (6, 7) are horizontally adjustable for adjustment of the device to the width of the conveyed products (2).

5. Out-liner according to Claim 4, characterized in that said product guides (6, 7, 8) are automatically adjustable in horizontal and vertical directions.

6. Out-liner according to one of the preceding claims, characterized in that collecting channels (10) are provided at the lower side of the conveyor tracks (1, 4, 5) to collect overturned products.

7. Out-liner according to one of the preceding claims, characterized in that the conveyor tracks (1, 4, 5) are driven by means of a single motor.

8. Out-liner according to one of the preceding claims, characterized in that said control means consists of sensors positioned along the conveyor track (1, 4, 5) for observing the joining of the products (2) moving in line, the signals of said sensors being processed in a control unit governing the speed and the transverse gradient (α) of the conveyor tracks (5) in the transition area (3).

9. Out-liner according to Claim 8, characterized in that said control unit is a programmed PLC (programmable logic chip) or a microprocessor.

**Patentansprüche**

1. Auswuchteinrichtung für die Änderung einer einzelnen Spur (1a) mit bewegenden Produkten (2) wie Flaschen, Topfe, Büchsen und ahnliches, in einen Plural von Spuren (4a), genannte einzelne Spur (1a) angetrieben von einem Zuförderer (1) und genannter Plural von Spuren (4a) angetrieben von einer Zahl von Abförderer (4) bewegt mit geringerer Geschwindigkeit als den Zuförderer (1), ein Zwischengebiet (3) anwesend zwischen genanntem Zuförderer (1) und genanntem Abförderer (4) und eine Zahl von Zwischenförderer (5) enthaltend, die Breite von jeder der Spuren substantiell gleich an die Breite der Produkte (2), die oberen Oberfläche der genannten Spuren (1, 4, 5), gestellt in einer schräg gestellter Fläche (9), die Geschwindigkeit der Zwischenförderer (5) schrittweise abnehmend zwischen dem Zuförderer (1) und dem Abförderer (4), ein erster Produktführer (7) anwesend über dem Zwischengebiet und den Abförderer (5, 4), genannter Führer (7) startend an dem Beginn der Zwischenspur (5) welche direkt neben dem Zuförderer (1) gestellt ist und in Abwärtsrichtung zur Aussenseite der Abförderer (3), ein zweiter Produktführer (6) anwesend an der anderen Seite des Zuförderers (1) gegenüber dem ersten Führer (7), genannter zweite Führer (6) enthält einen Teil schräg hinausragend über dem Zuförderer (1) um die Produkte (2) auf der Zwischenspur (5) zu bringen und einen Teil schräg hinausragend über der Zwischenspur (5) in eine Abwärtsrichtung bis an dem Abförderer (4) liegend neben einer Zwischenspur (5), Mitteln anwesend um quer biegen der Förderer (1, 4, 5) kontrollieren zu können, gekennzeichnet durch dass die Zwischenförderer (5) und Abförderer (4) einen gebeugten Teil (11) haben, der Zuförderer (1) verbunden mit dem Zwischenförderer, welcher an der Innenseite des genannten Teils (11) liegt, die Fläche (9) in welcher die obersten Oberfläche der Förderer (1, 4, 5) abwärts gebeugt von der Innenseite der Biegung anwesend sind, wie gesehen in eine Richtung quer zu die Bewegungsrichtung der genannten Spuren (1, 4, 5), Mitteln anwesend um die Geschwindigkeit des Zuförderers (1) regulieren zu können.

2. Auswuchteinrichtung nach Anspruch 1, gekennzeichnet, durch dass der Winkel der Biegung (α) der Förderer (1, 4, 5) in dem Zwischengebiet (3) zwischen 5° und 25° ist.

3. Auswuchteinrichtung nach Ansprüchen 1 oder 2, gekennzeichnet, durch dass die vertikale Distanz der Produktführer (6, 7) über den Förderer (1, 4, 5) angepasst werden kann.

4. Auswuchteinrichtung nach einem der vorhergehenden Ansprüchen, gekennzeichnet durch dass die Produktführer (6, 7) horizontal anpassbar sind für Anpassung der Einrichtung an die Breite der transportierten Produkte (2).

5. Auswuchteinrichtung nach Anspruch 4 gekennzeichnet durch dass genannten Produktführer (6, 7, 8) automatisch anpassbar sind in horizontale und vertikale Richtungen.

6. Auswuchseinrichtung nach einem der vorhergehenden Ansprüchen, gekennzeichnet durch dass Sammlungskanale (10) versehen sind an der niedrigen Seite der Förderer (1, 4, 5) um umgefallene Produkte zu sammeln.

7. Auswuchseinrichtung nach einem der vorhergehenden Ansprüchen, gekennzeichnet durch dass die Förderer (1, 4, 5) angetrieben werden von einem einzelnen Motor.

8. Auswuchseinrichtung nach einem der vorhergehenden Ansprüchen, gekennzeichnet durch dass genannte Überwachungsmitteln bestehen aus Sensoren, der Förderer (1, 4, 5) entlang gestellt, um das Einfügen der Produkte (2) in die Spur, die Signale von genannten Sensoren programmiert in einem Kontrollgerät, dass die Geschwindigkeit und den Transversgrad (α) der Förderer (5) in dem Zwischengebiet (3).

9. Auswuchseinrichtung nach Anspruch 8, gekennzeichnet durch dass genanntes Kontrollgerät ein programmierter PLC (programmable logic chip) oder ein Mikroprozessor ist.

**Revendications**

1. Dispositif de redressage pour la transformation d'une rangée simple (1a) de produits avançants (2) tels que bouteilles, pots, boîtes et similaires en un nombre de rangées (4a), ladite rangée simple (1a) étant avancée par une trajectoire de transport d'amenée (1) et ledit nombre de rangées (4a) étant avancé par un certain nombre de trajectoires de transport de décharge (4) avançant à une vitesse plus basse que la trajectoire de transport d'amenée (1), une région de transition (3) étant prévue entre ladite trajectoire de transport d'amenée (1) et lesdites trajectoires de transport de décharge (4) et comprenant un certain nombre de trajectoires de transport de transition (5), la largeur de chacune des dites trajectoires étant essentiellement égale à la largeur des produits (2), les surfaces supérieures des dites trajectoires (1, 4, 5) étant logées dans un plan (9) disposé obliquement, la vitesse des trajectoires de transport de transition (5) diminuant pas à pas entre la trajectoire de transport d'amenée (1) et les trajectoires de transport de décharge (4), un premier guidage des produits (7) étant prévu au-dessus des trajectoires de transport de transition et de décharge (5, 4,), ledit guidage (7) commençant près du début de la trajectoire de transition (5) disposée immédiatement à côté de la trajectoire d'amenée (1) et s'étendant en aval vers l'extérieur des trajectoires de transport de décharge (3), un second guidage de produits (6) étant prévu à l'autre côté de la trajectoire d'amenée (1) opposé au premier guidage (7), ledit second guidage (6) comprenant une partie s'étendant obliquement sur la trajectoire d'amenée (1) pour mener positivement les produits (2) sur la trajectoire de transition (5) et une partie s'étendant obliquement sur la trajectoire de transition (5) en aval jusqu'aux trajectoires de décharge (4) situées à côté d'une trajectoire de transition (5), des moyens étant prévus pour commander l'inclinaison traversale des trajectoires de transport (1, 4, 5), caractérisé en ce que

les trajectoires de transport de transition (5) et les trajectoires de transport de décharge (4) présentent une partie courbée (11), la trajectoire de transport d'amenée (1) étant reliée à la trajectoire de transport de transition qui est située au côté intérieur de ladite partie courbée (11), le plan (9) dans lequel les surfaces supérieures des trajectoires de transport (1, 4, 5) sont situées, s'inclinant vers le bas à partir du côté intérieur de la courbe vu dans une direction transversale à la direction d'avancement des trajectoires (1, 4, 5), des moyens étant prévus pour commander la vitesse de la trajectoire de transport d'amenée (1).

2. Dispositif de redressage selon la revendication 1, caractérisé en ce que l'angle d'inclinaison (α) des trajectoires de transport (1, 4, 5) de la région de transition (3) est de 5° à 25°.

3. Dispositif de redressage selon la revendication 1 ou 2, caractérisé en ce que la distance verticale du guidage de produits (6, 7) au-dessus des trajectoires de transport (1, 4, 5) peut être ajustée.

4. Dispositif de redressage selon l'une quelconque des revendications précédentes, caractérisé en ce que les guidage de produits (6, 7) sont ajustables horizontalement pour l'ajustage du dispositif à la largeur des produits (2) transportés.

5. Dispositif de redressage selon la revendication 4, caractérisé en ce que les guidages de produits (6, 7, 8) sont adjustables automatiquement dans la direction horizontale et verticale.

6. Dispositif de redressage selon l'une quelconque des revendications précédentes, caractérisé en ce que des canaux collecteurs (10) sont prévus au côté inférieur des trajectoires de transport (1, 4, 5) pour ramasser des produits renversés.

7. Dispositif de redressage selon l'une quelconque des revendications précédentes, caractérisé en ce que les trajectoires de transport (1, 4, 5) sont entraînées au moyen d'un seul moteur.

8. Dispositif de redressage selon l'une quelconque des revendications précédentes, caractérisé en ce que ledit moyen de commande se compose de détecteurs disposés le long de la trajectoire de transport (1, 4, 5) pour observer la jonction des produits (2) s'avancant dans une rangée, les signaux desdits détecteurs étant traités dans une unité de commande qui commande la vitesse et l'inclinaison traversale (α) des trajectoires de transport (5) dans la région de transition (3).

9. Dispositif de redressage selon la revendication 8, caractérisé en ce que ladite unité de commande est un PLC programmé ou un microprocesseur.

FIG. 2

FIG 1